# EUROPEAN PATENT APPLICATION

(11) **EP 2 711 861 A1**
(43) Date of publication of application: **26.03.2014**
(21) Application number: 12360068.6
(22) Date of filing: 20.09.2012
(51) Int. Cl.: G06F 21/62, G06F 21/57

(54) **Method and system of controlling changes in an operating system**

(71) Applicant: Alcatel Lucent, 75007 Paris (FR)
(72) Inventor: Cherubini, Davide, Castleknock, Dublin 15 (IE); Cucinotta, Tommaso, Blanchardstown, Dublin 15 (IE)
(74) Representative: Coghlan, Judith Elizabeth Kensy

(57) **Abstract**

A method of controlling system critical changes implementable by a user of an operating system, a computer program product and an operating system operable to perform that method. The method comprises: receiving a request from a user to make a system critical change; assessing whether the user has appropriate privileges to make the system critical change; and, if so, notifying at least one further user having appropriate privileges to make the system critical change of the received request; and awaiting approval from at least one further user before implementing the requested system critical change. Aspects and embodiments improve security of a computer system by removing single user's capability to directly issue and have implemented dangerous or disruptive commands.

## Description

### FIELD OF THE INVENTION

The present invention relates to a method of controlling system critical changes implementable by a user of an operating system, an operating system and computer program product operable to perform that method.

### BACKGROUND

There is a need to provide better protection of computing systems. System administrators typically have access to data and code within a system. Furthermore, untrusted, potentially malicious, software may run on systems and may gain access to data and code within a system.

Secure systems which are more resilient to potentially malicious or detrimental changes being made must be technically valid yet also affordable from a practical and implementation viewpoint.

It is desired to provide an operating system having improved resilience to potentially malicious or detrimental changes.

### SUMMARY

A first aspect provides a method of controlling system critical changes implementable by a user of an operating system, the method comprising: receiving a request from a user to make a system critical change; assessing whether the user has appropriate privileges to make the system critical change; and, if so, notifying at least one further user having appropriate privileges to make the system critical change of the received request; and awaiting approval from the at least one further user before implementing the requested system critical change.

Computing systems hosted by servers co-located in, for example, a datacenter, are generally well protected since physical access to server rooms is typically strictly restricted. Remote access to operating systems and applications running thereon is also typically controlled, for example, by means of a secure shell (SSH) or remote desktop session. Methods exist that prevent a general user, be that user a human or a software service, having the ability to make potentially disruptive changes to a computing system.

Typically a special user exists which has virtually unlimited power to make changes to a system. That user is typically referred to as a "*superuser*" in many operating systems. In UNIX and UNIX-like systems, a superuser (root) is operable to change permissions of each user. The user "root" has unlimited access to files and commands. Any malicious user, or malware, that gains superuser access can therefore be operable to perform any action within a system, for example, erase sensitive data, shutdown a virtual machine or shutdown an entire system. It will be appreciated that a real superuser may also be operable to perform the same set of actions, including the dangerous actions suggested above, albeit that a real superuser may perform those actions unintentionally or inadvertently. Such a scenario may also occur in other operating systems, for example, Microsoft Windows.

Operating systems typically function according to a "least-privilege" principle, according to which it is possible to configure user accounts such that each user (other than the superuser) is able to administer only some available services on a platform. For example, a user might be allocated privileges to be able to change the configuration of a web server and restart it, but that user might not be afforded or allocated sufficient privileges to be able to shut down other services or the whole system. A user might make involuntary mistakes in configuring services or voluntarily misconfigure services for personal purposes.

The access-control model of a typical operating system is such that in order to allow a user to administer each service of an operating system a query is sent to an access control subsystem and an answer returned from that access control subsystem is returned in the form of a binary response. Either the user is authorized or is not authorized to administer the service.

Administration actions taken by an authorized user are approved, without a need for those actions to be checked. Aspects and embodiments described herein recognize that there may be benefits associated with a change to a typical operating system access control model such that an action, for example, a critical action, taken by an authorized user may require approval by one or more other users with appropriate privileges such that a new configuration is agreed by more than one user before any change is applied by the system.

It will be appreciated that such an arrangement may be of use if implemented on datacenter and/or cloud-computing servers, where misconfiguration of a server due to a mistake by a system administrator may lead to breaking security level agreements with customers or, for example, the breaking security and privacy of customers' data.

In a typical modern operating system, an Access Control List (ACL) is used to authorize a user to perform a requested operation. For example, users afforded a capability to read and/or write and/or execute a specific file will typically be defined in the ACL associated with that specific file. File systems may support Portable Operating System Interface (POSIX) ACLs, in accordance with which multiple access rules for individual users and groups may be specified for each file in a system.

In known ACL implementations a *superuser* exists and that superuser has unlimited permissions in respect of the entire system and is therefore able to take any action, for example, add, edit, or delete any file or start, stop, or restart any application running on the system. Often a superuser is a trained and skilled person and that superuser is also typically referred to as a *system administrator.* Such a system administrator is typically in charge of supporting and maintaining a computer system. A system administrator is typically equipped with training and experience that may aid maintenance of a low failure and data loss rate. However, human error may still occur and malicious users or software may still operate disruptively on a system.

In order to cope with human errors a system or application may be operable to automatically check any issued "critical" command. The system or application may be operable to send appropriate warning messages to a superuser. A final decision in respect of a critical command may be made by the superuser, who may ignore either voluntarily or unintentionally any such warning messages and the critical command may be committed. It will be appreciated that activity of malicious users or software which have obtained superuser access to a system, for example, by privilege escalation techniques, is not controllable. Some re-authentication countermeasures may be applied, but often this happens too late.

Workflow-based interaction models are sometimes available on individual applications or services in which the configuration changes need to be approved by other users before being committed. For example, various content-management systems (CMS) that support the publishing of web pages on the Internet have such functionality, often available in form of a web-based editing system, according to which a user may prepare some changes to a website, and those changes are not made definitive until some other user approves the changes. However, no such work-flows are typically available at an innermost functional level of an operating system, as proposed in by aspects and embodiments described herein.

The first aspect provides for multi-authorization or multi-approval administration of an operating system and/or services provided by such an operating system. Aspects may therefore provide a means to avoid potentially disruptive changes on a real, or virtual, computing system. Aspects and embodiments extend an operating system (OS) to provide an Access-Control Model that enforces that two or more administrators are required to agree to a "critical" action before that change is committed. Critical actions may be configured depending on implementation but are generally those associated with the making of a potentially disruptive change in configuration of an operating system or one or more services provided by the operating system.

According to one embodiment, at least one of the user and the at least one further user have system administrator privileges. Those administrator privileges may be substantially synonymous to superuser priviledges. In embodiments, the user and the at least one further user have the same privileges. Accordingly, peer approval may occur. According to one embodiment, both the user and the at least one further user have system administrator privileges. Accordingly, multi-approval peer approval may be necessary to commit a system critical change. If a proposed or requested change is of particular importance a greater number of peer users may be required to approve the change.

According to one embodiment, the approval and implementation occurs asynchronously to the receiving of the request. Accordingly, in some embodiments a requested operation or change is deferred for later approval by the at least one further user, that second user being able to double-check a proposed system-level change before it is implemented. Accordingly, there is no need for synchronous operation of both a requesting user and the at least one further user in order to authenticate or approve a requested change. It will be appreciated that, according to some embodiments, for each critical change requested an approval process must occur and that that cross-review occurs each and every time a system critical change is requested by a user. Accordingly, no single user can implement a system critical change, irrespective of whether that user has been cross-reviewed in respect of a previously requested system critical change. Embodiments may provide an asynchronous mode of operation according to which a user may perform or request an administration action, or system critical action, the application of that action being delayed until another user with appropriate privileges can review and approve such an action. Each user may log in individually, using their own credentials to perform a system critical change and/or approve and apply changes requested by others awaiting approval.

According to one embodiment, receiving, assessing and notifying is implemented in kernel space. Aspects and embodiments may be realised in kernel space, for example, as an extension of an Access Control List, or in user space, for example, implementation by means of a constantly running unmodifiable daemon. According to one embodiment, receiving, assessing and notifying is implemented in user space. According to one embodiment, receiving, assessing and notifying is implemented by a daemon run by the operating system, the daemon having appropriate privileges. In one embodiment, the daemon has superuser privileges. According to one embodiment, the daemon is unmodifiable by any single user of the operating system. It will be appreciated that modification, for example, upgrading or fixing or adding or removing system critical actions to a predetermined set of system critical changes, of the daemon itself may comprise a system critical change and require a multi-user approval system if it is desired to change the operation parameters of the daemon.

According to one embodiment, the system critical changes comprise critical operating system level operations.

According to one embodiment, the method comprises configuring which changes implementable by an operating system are deemed system critical changes. Examples of critical operations or processes which may be subject to a multi approval process by an operating system include, for example: reboot or shutdown a virtual or real machine; modification of file or process permissions; application of changes to security settings (for example, firewall policies); applying changes to network settings; accessing other sensitive data belonging to another user and other similar actions. Aspects and embodiments allow for a multi-approval workflow within an operating system which protects critical operating system level operations, such as reconfiguration of network adaptors, networking services and routing tables, creation or deletion of a user, modification of user privileges, performing shutdown or reboot operations and similar.

According to one embodiment, the method comprises allocating a security level to each system critical change implementable by an operating system and associating notification and approval parameters to the system critical change based upon the allocated security level. Accordingly, those changes determined to have a high security level may require more than one further user to approve before the change is committed. If a change has a high security level, then the notification method chosen may comprise a more immediate form of notification, such as initiation of a text message, rather than notification to a further user or users on next log-in. The notification and approval parameters can this be adapted to suit various types of critical level system changes.

According to one embodiment, the notifying at least one further user comprises one or more of: initiation of a procedure to send an e-mail to the at least one further user, initiation of a procedure to send an SMS message to the at least one further user; initiation of a procedure to send an instant message to the at least one further user; initiation of a procedure to contact the at least one further user by telephone; initiation of a procedure to display a pop-up message to the at least one further user. Accordingly, notification may occur in one or more of a variety of ways. It will be appreciated that a kernel itself is not operable to send e-mails, but if implemented in kernel space, embodiments may be operable such that a kernel may be operable to hand over pending change requests requiring approval to an appropriate user-space daemon, that daemon itself being operable to notify appropriate users of a change request.

A second aspect provides a computer program product operable, when executed on a computer, to perform the method of the first aspect.

A third aspect provides an operating system operable to control system critical changes implementable by a user, the operating system comprising: request reception logic operable to receive a request from a user to make a system critical change; privilege assessment logic operable to assess whether the user has appropriate privileges to make the system critical change; notification logic operable to notify at least one further user having appropriate privileges to make the system critical change of the received request if the user is assessed to have appropriate privileges to make the system critical change; and implementation logic operable to await approval from the at least one further user before implementing the requested system critical change.

According to one embodiment, at least one of the user and the at least one further user have system administrator privileges.

According to one embodiment, both the user and the at least one further user have system administrator privileges.

According to one embodiment, the implementation logic is operable to await asynchronous approval from the at least one further user before implementing the requested system critical change.

According to one embodiment, the reception, assessment and notification logic operates in kernel space.

According to one embodiment, the reception, assessment and notification logic operates in user space.

According to one embodiment, the reception, assessment and notification logic operates as a daemon run by the operating system, the daemon having appropriate privileges.

According to one embodiment, the daemon is unmodifiable by any single user of the operating system.

According to one embodiment, the critical changes comprise critical operating system level operations.

According to one embodiment, the operating system comprises configuration logic operable to configure which changes implementable by the operating system are deemed system critical changes.

According to one embodiment, the configuration logic is operable to allocate a security level to each system critical change implementable by the operating system and associate notification and approval parameters to the system critical change based upon the allocated security level.

According to one embodiment, the notification logic is operable to notify at least one further user by one or more of: initiation of a procedure to send an e-mail to the at least one further user, initiation of a procedure to send an SMS message to the at least one further user; initiation of a procedure to send an instant message to the at least one further user; initiation of a procedure to contact the at least one further user by telephone; initiation of a procedure to display a pop-up message to the at least one further user.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically an example of a 2-administrator approval process;
Figures 2 and 3 are approval sequence diagrams illustrating schematically an approval process in accordance with one embodiment.

### DESCRIPTION OF THE EMBODIMENTS

### Overview

Before discussing the embodiments in any more detail, first an overview will be provided. Aspects and embodiments extend an operating system (OS) to provide an Access-Control Model that enforces that two or more administrators are required to agree to a "critical" action before that change is committed. Critical actions may be configured depending on implementation but are generally those associated with the making of a potentially disruptive change in configuration of an operating system or one or more services provided by the operating system.

Aspects and embodiments provide an operating system having multi-authorization or multi-approval administration of an OS, or services available at the lowest levels of the software stack, as a direct feature of the operating system access-control subsystem. In other words, aspects and embodiments provide an operating system which operates as if it has multiple administrators two or more of whom are required to mutually approve critical operations before those critical operations are put into effect. It will be appreciated that the mutual, multi-approval process itself may also be used to define an operation or a process as critical.

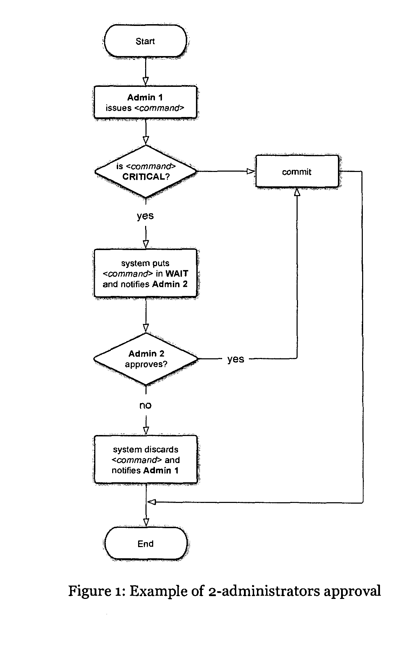

A multi-level approval scheme can be implemented in several ways, for example:
- A 2-administrator approval process as illustrated schematically in Figure 1 according to which Admin_1 approves Admin_2's operations and vice versa;
- An n-administrator approval process according to which an administrator's operation must be approved by another admininstrator (single approval) or by a combination of 2 or more other administrators (multiple approval).

Examples of critical operations or processes which may be subject to a multi approval process by an operating system include, for example:
- reboot or shutdown a virtual or real machine;
- modification of file or process permissions;
- application of changes to security settings (for example, firewall policies);
- applying changes to network settings;
- accessing other sensitive data belonging to another user.

Aspects and embodiments may be realised in kernel space, for example, as an extension of an Access Control List, or in user space, for example, implementation by means of a constantly running unmodifiable daemon.

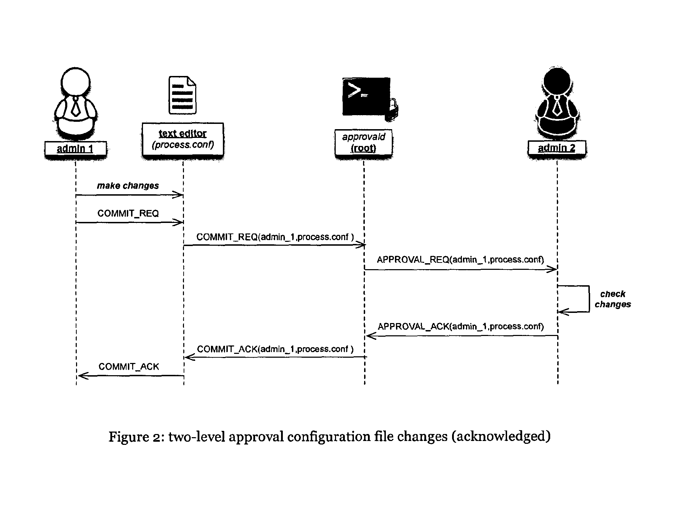

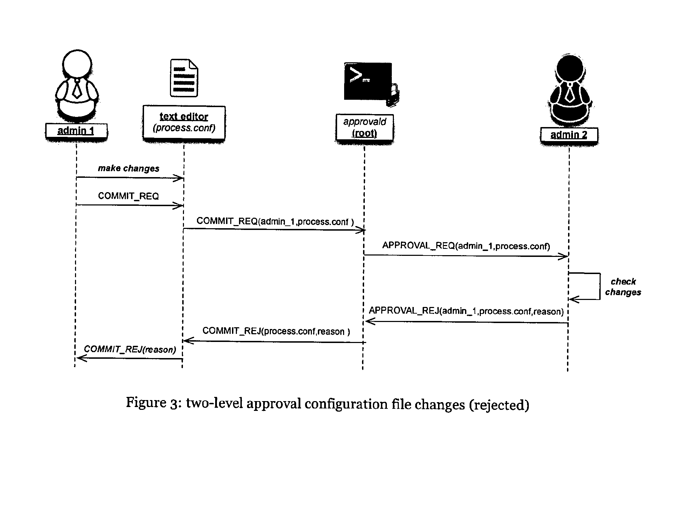

Figures 2 and 3 are approval sequence diagrams illustrating schematically an approval process in accordance with one embodiment.

According to one embodiment, an appropriate change may be implemented by a UNIX system to put a multi-approval system in place. A suitable change may comprise an endless running process, for example, a daemon called *approvald,* that daemon having specific characteristics and ownership.

According to such an embodiment, superuser root retains standard UNIX-defined privileges and is the only user configured to have full administrative rights. However, in accordance with one embodiment, after an operating system installation procedure, the login of administrator root is permanently and forcibly disabled. User root has previously initiated the approval daemon and is the only user associated with the system having privileges on *approvald.* That is to say, root "owns" the *approvald* daemon and is the only user in the system who can start and/or stop it.

In Figure 2 and Figure 3, two possible approval sequences are shown. According to the illustrated examples, a "critical" configuration file (*process.conf*), of a given process (*process*), is being changed by a system administrators (for example, admin_1).

However, since *process.conf has* been preconfigured to be a "critical" process, only the *approvald* daemon is operable to commit permanent changes to the system. In other words, the commit process requires that an additional check on the changes proposed by admin_1, is performed. In accordance with the example shown, the approval daemon operates such that the additional check required before a change can be committed comprises a check and approval by a second system administrator (for example, admin_2).

According to some embodiments a procedure can be implemented as described in more detail below and as shown in Figures 2 and 3.
1. when **admin_1** tries to commit the changes made on *process.conf*(for example, by saving the new *process.conf* or restarting *process*), the *approvald* daemon is notified of such a request. For example in Figure 2 and Figure 3, the text editor sends a **COMMIT_REQ(<user>, <file>)** command to *approvald*;
2. the daemon *approvald* notifies **admin_2,** with any suitable notification method (for example, email, Instant Messaging, SMS, pre-record phone call, pop-up message) that changes have been proposed for *process.conf;*
3. the daemon *approvald* forwards such **COMMIT_REQ** request to **admin_2** as an **APPROVAL_REQ(<user>, <file>).** The **APPROVAL_REQ** can either be part of a separate message or embedded in the notification message itself;
4. as a result **admin_2** will check the changes made by **admin_1** that can either be approved (Figure 2) or rejected (Figure 3). These approved/rejected messages to *approvald* are represented with **APPROVAL_ACK** and **APPROVAL_REJ,** respectively;
5. Finally, *approvald* notifies (for example directly or via the text editor) **admin_1** of the decision made on proposed changes to *process.conf.*

Aspects cut administrator error rate and may diminish significantly damage which may be caused by a *superuser* attack performed, for example, by an attacker or by malware.

Aspects and embodiments improve security of a computer system by removing an administrator's capability to directly issue dangerous or disruptive commands.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, for example, digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling system critical changes implementable by a user of an operating system, said method comprising:
receiving a request from a user to make a system critical change;
assessing whether said user has appropriate privileges to make said system critical change;
and, if so, notifying at least one further user having appropriate privileges to make said system critical change of said received request; and
awaiting approval from at least one said further user before implementing said requested system critical change.

2. A method according to claim 1, wherein both said user and said at least one further user have system administrator privileges.

3. A method according to claim 1 or claim 2, wherein said approval and implementation occurs asynchronously to said reception of said request.

4. A method according to any one of claims 1 to 3, wherein receiving, assessing and notifying is implemented in kernel space.

5. A method according to any one of claims 1 to 3, wherein receiving, assessing and notifying is implemented in user space.

6. A method according to claim 5, wherein receiving, assessing and notifying is implemented by a daemon run by said operating system, said daemon having appropriate privileges.

7. A method according to claim 6, wherein said daemon is unmodifiable by any single user of the operating system.

8. A method according to any preceding claim, wherein said system critical changes comprise critical operating system level operations.

9. A method according to any preceding claim, comprising configuring which changes implementable by an operating system are deemed system critical changes.

10. A method according to any preceding claim, comprising allocating a security level to each system critical change implementable by an operating system and associating notification and approval parameters to said system critical change based upon said allocated security level.

11. A method according to any preceding claim, wherein notifying at least one further user comprises one or more of: initiation of a procedure to send an e-mail to said at least one further user, initiation of a procedure to send an SMS message to said at least one further user; initiation of a procedure to send an instant message to said at least one further user; initiation of a procedure to contact said at least one further user by telephone; initiation of a procedure to display a pop-up message to said at least one further user.

12. A computer program product operable, when executed on a computer, to perform the method of any one of claims 1 to 11.

13. An operating system operable to control system critical changes implementable by a user, said operating system comprising:
request reception logic operable to receive a request from a user to make a system critical change;
privilege assessment logic operable to assess whether said user has appropriate privileges to make said system critical change;
notification logic operable to notify at least one further user having appropriate privileges to make said system critical change of said received request if said user is assessed to have appropriate privileges to make said system critical change; and
implementation logic operable to await approval from at least one said further user before implementing said requested system critical change.

## Amended claims

### Amended claims in accordance with Rule 137(2) EPC.

**1.** A method of controlling system critical changes implementable by a user of an operating system, said method comprising:
receiving a request from a user to make a system critical change;
assessing whether said user has appropriate privileges to make said system critical change;
and, if so, notifying at least one further user having appropriate privileges to make said system critical change of said received request; and
awaiting approval from at least one said further user before implementing said requested system critical change, wherein both said user and said at least one further user have system administrator privileges and wherein receiving, assessing and
notifying is implemented in kernel space.

**2.** A method according to claim 1, wherein said approval and implementation occurs asynchronously to said reception of said request.

**3.** A method according to claim 1 or claim 2, wherein receiving, assessing and notifying is implemented by a daemon run by said operating system, said daemon having appropriate privileges.

**4.** A method according to claim 3, wherein said daemon is unmodifiable by any single user of the operating system.

**5.** A method according to any preceding claim, wherein said system critical changes comprise critical operating system level operations.

**6.** A method according to any preceding claim, comprising configuring which changes implementable by an operating system are deemed system critical changes.

**7.** A method according to any preceding claim, comprising allocating a security level to each system critical change implementable by an operating system and associating notification and approval parameters to said system critical change based upon said allocated security level.

**8.** A method according to any preceding claim, wherein notifying at least one further user comprises one or more of: initiation of a procedure to send an e-mail to said at least one further user, initiation of a procedure to send an SMS message to said at least one further user; initiation of a procedure to send an instant message to said at least one further user; initiation of a procedure to contact said at least one further user by telephone; initiation of a procedure to display a pop-up message to said at least one further user.

**9.** A computer program product operable, when executed on a computer, to perform the method of any one of claims 1 to 10.

**10.** An operating system operable to control system critical changes implementable by a user, said operating system comprising:
request reception logic operable to receive a request from a user to make a system critical change;
privilege assessment logic operable to assess whether said user has appropriate privileges to make said system critical change;
notification logic operable to notify at least one further user having appropriate privileges to make said system critical change of said received request if said user is assessed to have appropriate privileges to make said system critical change; and implementation logic operable to await approval from at least one said further user before implementing said requested system critical change, and wherein both said user and said at least one further user have system administrator privileges and wherein receiving, assessing and notifying is implemented in kernel space.
